Europäisches Patentamt

European Patent Office

Office européen des brevets

(19)

(11) EP 0 464 547 B1

(12) EUROPEAN PATENT SPECIFICATION

(45) Date of publication and mention
of the grant of the patent:
13.05.1998 Bulletin 1998/20

(51) Int Cl.6: C10G 65/12

(21) Application number: 91110355.4

(22) Date of filing: 24.06.1991

(54) Process for the production of high viscosity index lubricants

Verfahren zur Herstellung von Schmiermitteln mit hohem Viskositätsindex

Procédé de préparation de lubrifiants à haute indice de viscosité

(84) Designated Contracting States:
BE DE ES FR GB IT NL

(30) Priority: 05.07.1990 US 548702

(43) Date of publication of application:
08.01.1992 Bulletin 1992/02

(73) Proprietor: MOBIL OIL CORPORATION
Fairfax, Virginia 22037-0001 (US)

(72) Inventors:
• Degnan, Thomas Francis, Jr.
Burlington County, N.J. 08057 (US)
• Hanlon, Robert Tryon
Gloucester County, N.J. 08096 (US)
• Karsner, Grant George
Voorhees Township, N.J. 08043 (US)
• Mazzone, Dominick Nicholas
Gloucester County, N.J. 08090 (US)

(74) Representative: Kador & Partner
Corneliusstrasse 15
80469 München (DE)

(56) References cited:
EP-A- 0 095 303          EP-A- 0 188 913
EP-A- 0 225 053          EP-A- 0 280 476
WO-A-90/09363

## Description

Mineral oil based lubricants are conventionally produced by a separative sequence carried out in the petroleum refinery which comprises fractionation of a paraffinic crude oil under atmospheric pressure followed by fractionation under vacuum to produce distillate fractions (neutral oils) and a residual fraction which, after deasphalting and severe solvent treatment may also be used as a lubricant basestock usually referred to as bright stock. Neutral oils, after solvent extraction to remove low viscosity index (V.I.) components are conventionally subjected to dewaxing, either by solvent or catalytic dewaxing processes, to the desired pour point, after which the dewaxed lubestock may be hydrofinished to improve stability and remove color bodies. This conventional technique relies upon the selection and use of crude stocks, usually of a paraffinic character, which produce the desired lube fractions of the desired qualities in adequate amounts. The range of permissible crude sources may, however, be extended by the lube hydrocracking process which is capable of utilizing crude stocks of marginal or poor quality, usually with a higher aromatic content than the best paraffinic crudes. The lube hydrocracking process, which is well established in the petroleum refining industry, generally comprises an initial hydrocracking step carried out under high pressure in the presence of a bifunctional catalyst which effects partial saturation and ring opening of the aromatic components which are present in the feed. The hydrocracked product is then subjected to dewaxing in order to reach the target pour point since the products from the initial hydrocracking step which are paraffinic in character include components with a relatively high pour point which need to be removed in the dewaxing step.

Current trends in the design of automotive engines are associated with higher operating temperatures as the efficiency of the engines increases and these higher operating temperatures require successively higher quality lubricants. One of the requirements is of higher viscosity indices (V.I.) in order to reduce the effects of the higher operating temperatures on the viscosity of the engine lubricants. High V.I. values have conventionally been attained by the use of V.I. improvers, e.g. polyacrylates, but there is a limit to the degree of improvement which may be effected in this way. In addition, V.I. improvers tend to undergo degradation under the effects of high temperatures and high shear rates encountered in the engine, the more stressing conditions encountered in high efficiency engines resulting in even faster degradation of oils which employ significant amounts of V.I. improvers. Thus there is a continuing need for automotive lubricants which are based on fluids of high viscosity index and which are stable to the high temperature, high shear rate conditions encountered in modern engines.

Synthetic lubricants produced by the polymerization of olefins in the presence of certain catalysts have been shown to possess excellent V.I. values, but they are expensive to produce by the conventional synthetic procedures and usually require expensive starting materials. There is therefore a need for the production of high V.I. lubricants from mineral oil stocks which may be produced by techniques comparable to those presently employed in petroleum refineries.

In theory, as well as in practice, lubricants should be highly paraffinic in nature since paraffins possess the desirable combination of low viscosity and high viscosity index. Normal paraffins and slightly branched paraffins, e.g. n-methyl paraffins, are waxy materials which confer an unacceptably high pour point on the lube stock and are therefore removed during the dewaxing operations in the conventional refining process described above. It is, however, possible to process waxy feeds in order to retain many of the benefits of their paraffinic character while overcoming the undesirable pour point characteristic. A severe hydrotreating process for manufacturing lube oils of high viscosity index is disclosed in Developments in Lubrication, PD 19(2), 221-228, S. Bull et al, and in this process, waxy feeds such as waxy distillates, deasphalted oils and slack waxes are subjected to a two-stage hydroprocessing operation in which an initial hydrotreating unit processes the feeds in blocked operation with the first stage operating under higher temperature conditions to effect selective removal of the undesirable aromatic compounds by hydrocracking and hydrogenation. The second stage operates under relatively milder conditions of reduced temperature at which hydrogenation predominates, to adjust the total aromatic content and influence the distribution of aromatic types in the final product. The viscosity and flash point of the base oil are then controlled by topping in a subsequent redistillation step after which the pour point of the final base oil is controlled by dewaxing in a solvent dewaxing (MEK-toluene) unit. The slack waxes removed from the dewaxer may be reprocessed to produce a base oil of high viscosity index.

Processes of this type, employing a waxy feed which is subjected to hydrocracking over an amorphous bifunctional catalyst such as nickel-tungsten on alumina or silica-alumina are disclosed, for example, in GB-A-1,429,494, 1,429,291 and 1,493,620 and US-A-3,830,273, 3,776,839, 3,794,580 and 3,682,813. In the process described in GB 1,429,494, a slack wax produced by the dewaxing of a waxy feed is subjected to hydrocracking over a bifunctional hydrocracking catalyst at hydrogen pressures of 2,000 psig (13881 kPa) or higher, followed by dewaxing of the hydrocracked product to obtain the desired pour point. Dewaxing is stated to be preferably carried out by the solvent process with recycle of the separated wax to the hydrocracking step.

In processes of this kind, the hydrocracking catalyst is typically a bifunctional catalyst containing a metal hydrogenation component on an amorphous acidic support. The metal component is usually a combination of base metals, with one metal selected from the iron group (Group VIII) and one metal from Group VIB of the Periodic Table, for example, nickel in combination with molybdenum or tungsten. Modifiers such as phosphorus or boron may be present, as described in GB 1,350,257, GB 1,342,499, GB 1,440,230, FR 2,123,235, FR 2,124,138 and EP 199,394. Boron may also be used as a modifier as described in GB 1,440,230. The activity of the catalyst may be increased by the use of fluorine, either by incorporation into the catalyst during its preparation in the form of a suitable fluorine compound or by in situ fluoriding during the operation of the process, as disclosed in GB 1,390,359.

Although the process using an amorphous catalyst for the treatment of the waxy feeds has shown itself to be capable of producing high V.I. lubricants, it is not without its limitations. At best, the technique requires a significant dewaxing capability, both in order to produce the feed as well as to dewax the hydrocracked product to the desired pour point. The reason for this is that although the amorphous catalysts are effective for the saturation of the aromatics under the high pressure conditions which are typically used (about 2,000 psig) their activity and selectivity for isomerization of the paraffinic components is not as high as might be desired; the relatively straight chain paraffins are not, therefore, isomerized to the less waxy isoparaffins of relatively high viscosity index but with low pour point properties, to the extent required to fully meet product pour point specifications. The waxy paraffins which pass through the unit therefore need to be removed during the subsequent dewaxing step and recycled, thus reducing the capacity of the unit. The restricted isomerization activity of the amorphous catalysts also limits the single-pass yields to a value below about 50 percent, with the corresponding waxy conversion being about 30 to 60%, even though higher yields would obviously enhance the efficiency of the process. The product V.I. is also limited by the isomerization activity, typically to about 145 at 0°F (-18°C) pour point in a single pass operation. The temperature requirement of the amorphous catalysts is also relatively high, at least in comparison to zeolite catalysts, typically being about 700 to 800°F (371 to 427°C).

Another approach to the upgrading of waxy feeds to high V.I. lubricant basestocks is disclosed in US-A-4,919,788 and 4,975,177, in which a waxy feed, typically a waxy gas oil, a slack wax, or a deoiled wax, is hydroprocessed over a highly siliceous zeolite beta catalyst. Zeolite beta is known to be highly effective for the isomerization of paraffins in the presence of aromatics, as reported in US 4,419,220, and its capabilities are effectively exploited in the process of US 4,919,788 and 4,975,177 in a manner which optimizes the yield and viscometric properties of the products. The zeolite beta catalyst isomerizes the high molecular weight paraffins contained in the back end of the feed to less waxy materials while minimizing cracking of these components to materials boiling outside the lube range. The waxy paraffins in the front end of the feed are removed in a subsequent dewaxing step, either solvent or catalytic, in order to achieve the target pour point. The combination of paraffin hydroisomerization with the subsequent selective dewaxing process on the front end of the feed is capable of achieving higher product V.I. values than either process on its own and, in addition, the process may be optimized either for yield efficiency or for V.I. efficiency, depending upon requirements.

While this zeolite-catalyzed process has shown itself to be highly effective for dealing with highly paraffinic feeds, the high isomerization selectivity of the zeolite beta catalysts, coupled with its lesser capability to remove low quality aromatic components, has tended to limit the application of the process to feeds which contain relatively low quantities of aromatics: the aromatics and other polycyclic materials are less readily attacked by the zeolite with the result that they pass through the process and remain in the product with a consequent reduction in V.I. The lube yield also tends to be constrained by the low wax isomerisation selectivity at low conversions and by wax cracking out of the lube boiling range at high conversions: maximum lube yields are typically obtained in the 20 to 30 weight percent conversion range (650°F+ conversion). It would therefore be desirable to increase isomerization selectivity and simultaneously to reduce hydrocracking selectivity in order to improve lube yield while retaining the high V.I. numbers in the product.

In summary, therefore, the processes using amorphous catalysts can be regarded as inferior in terms of single pass conversion and overall yield because the amorphous catalysts are relatively non-selective for paraffin isomerization but have a high activity for cracking so that overall yield remains low and dewaxing demands are high. The zeolite-catalyzed process, by contrast, is capable of achieving higher yields since the zeolite has a much higher selectivity for paraffin isomerization in the presence of polycyclic components but under the moderate hydrogen pressures used in the process, the aromatics are not effectively dealt with in lower quality feeds and operation is constrained by the differing selectivity factors of the zeolite at different conversion levels.

We have now devised a process for producing high quality, high viscosity index (V.I.) lubricants by a two-stage wax hydrocracking-hydroisomerization process. The process is capable of producing products with very high viscosity indices, typically above about 140, usually in the range of 140 to 155 with values of 143 to 147 being typical. The process is capable of being operated with feeds of varying composition to produce high quality lube basestocks in good yield. Compared to the process using amorphous catalysts, yields are higher and the dewaxing requirement for the product is markedly lower due to the effectiveness of the process in converting the waxy paraffins, mainly linear and near linear paraffins, to less waxy isoparaffins of high viscosity index. Compared to the zeolite-catalyzed process, it has the advantage of being able to accomodate a wider range of feeds at constant product quality since it is more effective for the removal of the low quality aromatic components from the feed; it also provides a yield advantage in the range where maximum lube yield is obtained (about 20-30% conversion) as well as providing a higher product V.I. across a wide conversion range from about 5 to 40 percent conversion.

According to the present invention a process for producing a high viscosity index lubricant having a viscosity index of at least 140 from a hydrocarbon feed of mineral oil origin having a wax content of at least 60 weight percent comprises

(i) hydrocracking the feed at a hydrogen partial pressure of at least 800 psig (5613 kPa) over a bifunctional lube hydrocracking catalyst comprising a metal hydrogenation component on an acidic, amorphous, porous support material to hydrocrack aromatic components present in the feed at a severity which results in a conversion of from 10 to 30 weight percent of the feed to material boiling below 343°C (650°F), and

(ii) isomerizing waxy paraffins present in the effluent from the hydrocracking in the presence of a low acidity isomerization catalyst having an alpha value of not more than 20 and comprising a noble metal hydrogenation component on a porous support material comprising zeolite beta to isomerize waxy paraffins to less waxy isoparaffins.

The feed typically comprises a petroleum wax having a wax content of at least 60 weight percent and an aromatic content of from 5 to 20 weight percent, such as a slack wax having an aromatic content of from 8 to 12 weight percent. The metal component of the hydrocracking catalyst preferably comprises at least one metal of Group VIII and at least one metal of Group VI of the Periodic Table, and the acidic support material is suitably alumina. Advantageously the hydrocracking catalyst is a fluorided lube hydrocracking catalyst, and may have been pre-fluorided to a fluorine content of 1 to 10 weight percent fluorine.

The conversion during the hydrocracking step to 650°F- (343°C-) material is from 10 to 30 weight percent of the feed. The isomerization catalyst suitably has an alpha value not greater than 10, or even not greater than 5.

Boron may be present as a framework component of the zeolite beta, the isomerization catalyst comprising from 0.5 to 2 weight percent platinum on a support comprising zeolite beta containing boron as a framework component and a matrix.

The isomerization is carried out in the presence of hydrogen at a pressure of at least 200 psig (1479 kPa), and the conversion to 650°F- (343°C-) product is generally not more than 30 weight percent, based on the feed to the isomerization step. The hydrocracking and/or isomerization may advantageously be carried out at a temperature not greater than 650°F (343°C).

Both hydrocracking and isomerization may be carried out in the presence of hydrogen at a pressure of at least 1000 psig (6991 kPa), with the isomerization being carried out at a temperature of from 550 to 700°F (288 to 371°C). Suitably in such a case the effluent from the hydrocracking may be cascaded directly to the isomerization.

In a favored embodiment the isomerization catalyst comprises a steamed Pt/zeolite beta catalyst containing boron as a framework component of the zeolite, having an alpha value not greater than 5 and a platinum content from 0.5 to 1.5 weight percent based on the total weight of the catalyst, and the product has a V.I. of 143 to 147.

In a further favored embodiment the isomerization is carried out in the presence of hydrogen at a hydrogen partial pressure from 200 to 1000 psig (1479 to 6991 kPa) at a temperature from 600 to 700°F (316 to 371°C) in the presence of a paraffin isomerization catalyst comprising a noble metal hydrogenation component on a low acidity support having an alpha value not greater than 10, the zeolite beta contains boron as a framework component, and the product has a viscosity index of at least 140.

In the first stage, the feed is subjected to hydroprocessing over a bifunctional catalyst comprising a metal hydrogenation component on an amorphous acidic support under relatively mild conditions of limited conversion. The second stage comprises a hydroisomerization step which is carried out over a noble metal-containing zeolitic catalyst of low acidity. In the first stage, the low quality aromatic components of the feed are subjected to hydrocracking reactions which result in complete or partial saturation of aromatic rings accompanied by ring opening reactions to form products which are relatively more paraffinic; the limited conversion in the first stage, however, enables these products to be retained without undergoing further cracking to products boiling below the lube boiling range, typically below about 650°F (343°C). Typically, the conversion in the first stage is limited to no more than 30 weight percent of the original feed.

In the second stage, the conditions are optimized for hydroisomerization of the paraffins originally present in the feed together with the paraffins produced by hydrocracking in the first stage. For this purpose a low acidity catalyst with high isomerization selectivity is employed, and for this purpose, a low acidity zeolite beta catalyst has been found to give excellent results. A noble metal, preferably platinum, is used to provide hydrogenation-dehydrogenation functionality in this catalyst in order to promote the desired hydroisomerization reactions.

Two particularly favored embodiments of the invention differ from one another in the manner in which the second stage is carried out. Both of these embodiments require relatively high pressure in the first stage in order to maximize removal of aromatic components in the feed and for this purpose pressures of 800 psig (5613 kPa), usually from 800 to 3,000 psig (5613 to 20771 kPa abs) are suitable. The second stage may be operated either by, in one embodiment, cascading the first stage effluent directly into the second stage without a pressure reduction or, in the other, the second stage may be operated at relatively lower pressures, typically up to 1,000 psig (6991 kPa abs) by passing the first stage products through an interstage separator to remove light ends and inorganic heteroatoms. The cascade process without interstage separation represents a preferred mode of operation because of its simplicity, although operation with the same or a reduced pressure in the second stage may be desirable if no high pressure vessel is available for this part of the operation. In both cases, however, the process is well suited for upgrading waxy feeds such as slack wax with aromatic contents greater than about 15 weight percent to high viscosity index lubricating oils with high single pass yields and a limited requirement for product dewaxing.

Drawings

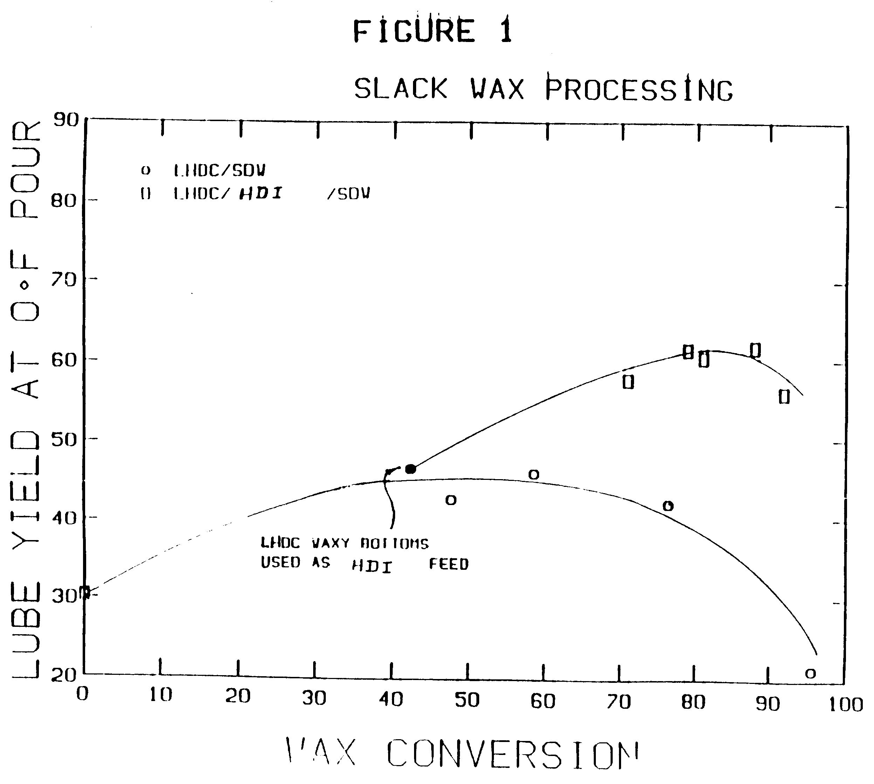

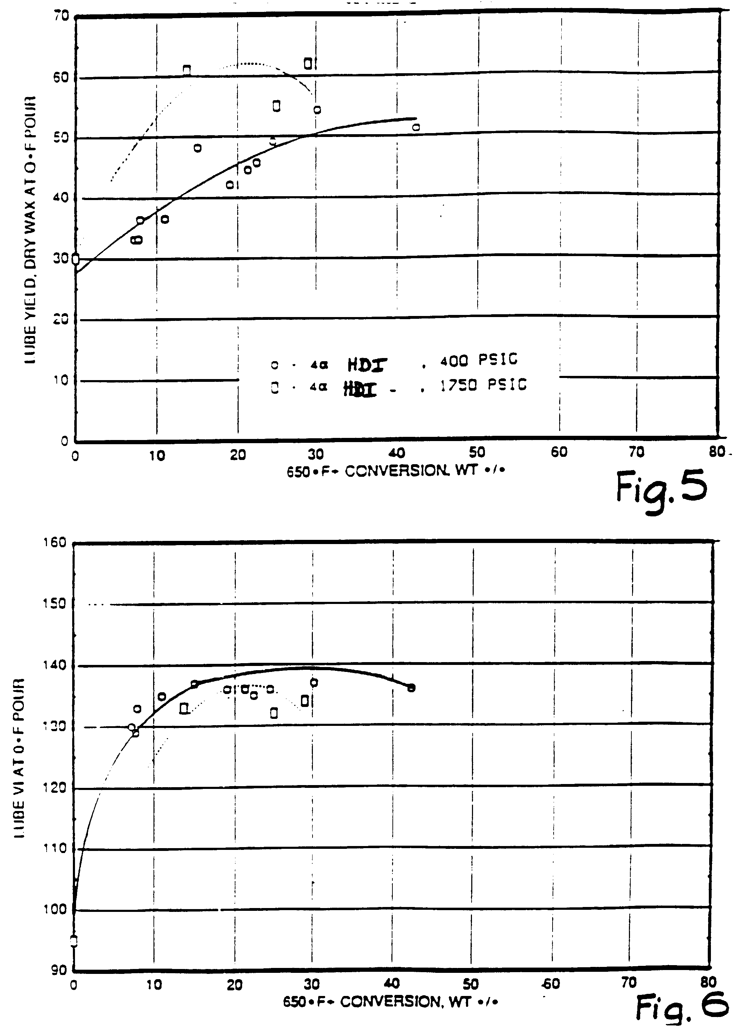

In the accompanying drawings Figures 1 to 7 are graphs illustrating the results of wax hydroprocessing experiments reported in the Examples.

The feed to the process comprises petroleum wax which contains at least 60 weight percent wax, as determined by ASTM test D-3235. In these feeds of mineral oil origin, the waxes are mostly paraffins of high pour point, comprising straight chain and slightly branched chain paraffins such as methylparaffins.

Petroleum waxes, that is, waxes of paraffinic character are derived from the refining of petroleum and other liquids by physical separation from a wax-containing refinery stream, usually by chilling the stream to a temperature at which the wax separates, usually by solvent dewaxing, e.g., MEK/toluene dewaxing or by means of an autorefrigerant process such as propane dewaxing. These waxes have high initial boiling points above about 650°F (about 343°C) which render them extremely useful for processing into lubricants which also require an initial boiling point of at least 650°F (about 343°C). The presence of lower boiling components is not to be excluded since they will be removed together with products of similar boiling range produced during the processing during the separation steps which follow the characteristic processing steps. Since these components will, however, load up the process units they are preferably excluded by suitable choice of feed cut point. The end point of wax feeds derived from the solvent dewaxing of neutral oils, i.e, distillate fractions produced by the vacuum distillation of long or atmospheric resids will usually be not more than about 1100°F (about 595°C) so that they may normally be classified as distillate rather than residual streams but high boiling wax feeds such as petrolatum waxes, i.e., the waxes separated from bright stock dewaxing, which may typically have an end point of up to about 1300°F (about 705°C), may also be employed.

The wax content of the feed is high, usually 60 to 80 weight percent with the balance from occluded oil comprising iso-paraffins, aromatics and naphthenics. The non-wax content of aromatics, polynaphthenes and highly branched naphthenes will normally not exceed about 40 weight percent of the wax and preferably will not exceed 25 to 30 weight percent. The waxy, highly paraffinic wax stocks usually have low viscosities because of their relatively low content of aromatics and naphthenes although the high content of waxy paraffins gives them melting points and pour points which render them unacceptable as lubricants without further processing.

Feeds of this type will normally be slack waxes, that is, the waxy product obtained directly from a solvent dewaxing process, e.g. an MEK or propane dewaxing process. The slack wax, which is a solid to semi-solid product, comprising mostly highly waxy paraffins (mostly n- and mono-methyl paraffins) together with occluded oil, may be fed directly to the first step of the present processing sequence as described below without the requirement for any initial preparation, for example, by hydrotreating.

The compositions of some typical waxes are given in Table 1 below.

TABLE 1

| Wax Composition - Arab Light Crude | | | | |
|---|---|---|---|---|
| | A | B | C | D |
| Paraffins, wt% | 94.2 | 81.8 | 70.5 | 51.4 |
| Mono-naphthenes, wt% | 2.6 | 11.0 | 6.3 | 16.5 |
| Poly-naphthenes, wt% | 2.2 | 3.2 | 7.9 | 9.9 |
| Aromatics, wt% | 1.0 | 4.0 | 15.3 | 22.2 |

A typical slack wax feed has the composition shown in Table 2 below. This slack wax is obtained from the solvent (MEK) dewaxing of a 300 SUS (65 cSt) neutral oil obtained from an Arab Light Crude.

TABLE 2

| Slack Wax Properties | |
|---|---|
| API | 39 |
| Hydrogen, wt% | 15.14 |
| Sulfur, wt% | 0.18 |

TABLE 2   (continued)

| Slack Wax Properties | |
|---|---|
| Nitrogen, ppmw | 11 |
| Melting point, °C (°F) | 57 (135) |
| KV at 100°C, cSt | 5.168 |
| PNA, wt%: | |
| Paraffins | 70.3 |
| Naphthenes | 13.6 |
| Aromatics | 16.3 |

| Simulated Distillation: | | |
|---|---|---|
| % | °C | (°F) |
| 5 | 375 | (710) |
| 10 | 413 | (775) |
| 30 | 440 | (825) |
| 50 | 460 | (860) |
| 70 | 482 | (900) |
| 90 | 500 | (932) |
| 95 | 507 | (945) |

Another slack wax suitable for use in the present process has the properties set out in Table 3 below. This wax is prepared by the solvent dewaxing of a 450 SUS (100cS) neutral raffinate:

TABLE 3

| Slack Wax Properties | |
|---|---|
| Boiling Range, °F (°C) | 708-1053 (375-567) |
| API | 35.2 |
| Nitrogen, basic, ppmw | 23 |
| Nitrogen, total, ppmw | 28 |
| Sulfur, wt% | 0.115 |
| Hydrogen, wt% | 14.04 |
| Pour point, °F (°C) | 120 (50) |
| KV (100°C) | 7.025 |
| KV (300°F, 150°C) | 3.227 |
| Oil (D 3235) | 35 |
| Molecular wt. | 539 |
| P/N/A: | |
| Paraffins | - |
| Naphthenes | - |
| Aromatics | 10 |

The waxy feed is subjected to a two-step hydrocracking-hydroisomerization process in which both steps may be carried out in the presence of hydrogen. In the first step, an amorphous bifunctional catalyst is used to promote the saturation and ring opening of the low quality aromatic components in the feed to produce hydrocracked products which are relatively more paraffinic. This stage is carried out under high pressure to favor aromatics saturation but the conversion is maintained at a relatively low level in order to minimize cracking of the paraffinic components of the feed and of the products obtained from the saturation and ring opening of the aromatic materials. Consistent with these process objectives, the hydrogen pressure in the first stage is at least 800 psig (5613 kPa abs) and usually is in the range of 1,000 to 3,000 psig (6991 to 20771 kPa abs). Normally, hydrogen partial pressures of at least 1500 psig (10436 kPa abs) are best in order to obtain a high level of aromatic saturation with pressures in the range of 1500 to 2500 psig (10436 to 17326 kPa abs) being suitable for most high pressure equipment. Hydrogen circulation rates of at least about 1000 SCF/Bb1 (about 180 n.1.1$^{-1}$), preferably in the range of 5,000 to 10,000 SCF/Bb1 (about 900 to 1800 n.1.1.$^{-1}$) are suitable.

In this stage of the process, the conversion of the feed to products boiling below the lube boiling range, typically to 650°F- (about 343°C-) products is limited to no more than 30 weight percent of the feed in order to maintain the desired high single pass yields which are characteristic of the process while preparing the feed for the second stage of the processing; an initial V.I. for the first stage product of at least about 130 is normally desirable for the final product to have the desired V.I. of 140 of higher. The actual conversion is, for this reason, dependent on the quality of the feed with slack wax feeds requiring a lower conversion than petrolatums where it is necessary to remove more low quality polycyclic components. With slack wax feeds derived from the dewaxing of neutral stocks, the conversion of 343°C+ (650°F+) material will, for all practical purposes not be greater than 10 to 20 weight percent, with about 15 weight percent being typical for heavy neutral slack waxes. Higher conversions may be encountered with petrolatum feeds in order to prepare the feed for the second stage processing. With petrolatum feeds, the first stage conversion will typically be in the range of 20 to 25 weight percent for high V.I. products. The conversion may be maintained at the desired value by control of the temperature in this stage which will normally be in the range 600 to 800°F (about 315 to 430°C) and more usually in the range of about 650 to 750°F (about 343 to 400°C). Space velocity variations may also be used to control severity although this will be less common in practice in view of mechanical constraints on the system.

The exact temperature selected to achieve the desired conversion will depend on the characteristics of the feed and of the catalyst as well as upon the extent to which it is necessary to remove the low quality aromatic components from the feed. In general terms, higher severity conditions are required for processing the more aromatic feeds up to the usual maximum of about 30 percent aromatics, then with the more paraffinic feeds. Thus, the properties of the feed should be correlated with the activity of the selected catalyst in order to arrive at the required operating temperature for the first stage in order to achieve the desired product properties, with the objective at this stage being to remove the undesirable, low quality aromatic components by hydrocracking while minimizing conversion of the more desirable paraffinic components to products boiling below the lube boiling range. In order to achieve the desired severity in this stage, temperature may also be correlated with the space velocity although for practical reasons, the space velocity will normally be held at a fixed value in accordance with mechanical and other constraints such as minimizing pressure drop. Generally, the space velocity will be in the range of 0.25 to 2 LHSV, hr$^{-1}$ and usually in the range of 0.5 to 1.5 LHSV.

A characteristic feature of the first stage operation is the use of a bifunctional lube hydrocracking catalyst. Catalysts of this type have a high selectivity for aromatics hydrocracking reactions in order to remove the low quality aromatic components from the feed. In general terms, these catalysts include a metal component for promoting the desired aromatics saturation reactions and frequently a combination of base metals is used, with one metal from the iron group (Group VIII) in combination with a metal of Group VIB. Typically a base metal such as nickel or cobalt is used in combination with molybdenum or tungsten. A preferred combination is nickel/tungsten since it has been found to be highly effective for promoting the desired aromatics hydrocracking reaction. Noble metals such as platinum or palladium may be used since they have good hydrogenation activity in the absence of sulfur but they will normally not be preferred. The amounts of the metals present on the catalyst are conventional for lube hydrocracking catalysts of this type and generally will range from 1 to 10 weight percent of the Group VIII metal and 10 to 30 weight percent of the Group VI metal, based on the total weight of the catalyst. If a noble metal component such as platinum or palladium is used instead of a base metal such as nickel or cobalt, relatively lower amounts are in order in view of the higher hydrogenation activities of these noble metals, typically from about 0.5 to 5 weight percent being sufficient. The metals may be incorporated by any suitable method including impregnation onto the porous support after it is formed into particles of the desired size or by addition to a gel of the support materials prior to calcination. Addition to the gel is a preferred technique when relatively high amounts of the metal components are to be added, e.g. above 10 weight percent of the Group VIII metal and above 20 weight percent of the Group Vi metal. These techniques are conventional in character and are employed for the production of lube hydrocracking catalysts.

The metal component of the catalyst is supported on a porous, amorphous metal oxide support and alumina is preferred for this purpose although silica-alumina may also be employed. Other metal oxide components may also be present in the support although their presence is less desirable. Consistent with the requirements of a lube hydrocracking catalyst, the support should have a pore size and distribution which is adequate to permit the relatively bulky components of the high boiling feeds to enter the interior pore structure of the catalyst where the desired hydrocracking reactions occur. To this extent, the catalyst will normally have a minimum pore size of about 50 A° (5 nm), i.e. with no less than about 5 percent of the pore having a pore size less than 50 A° (5 nm) pore size, with the majority of the pores having a pore size in the range of 50-400 A° (5-40 nm) (no more than 5 percent having a pore size above 400 A°), preferable with no more than about 30 percent having pore sizes in the range of 200-400 (20-40 nm). Preferred catalysts for the first stage have at least 60 percent of the pores in the 50-200 (5-20 nm) range. The pore size distribution and other properties of some typical lube hydrocracking catalysts suitable for use in the first stage are shown in Table 4 below:

TABLE 4

| LHDC Catalyst Properties | | | |
|---|---|---|---|
| Form | 1.5 mm cyl | 1.5 mm tri | 1.5 mm cyl |
| Pore Volume, cc/gm | 0.331 | 0.453 | 0.426 |
| Surface Area, $m^2$/gm | 131 | 170 | 116 |
| Nickel, wt% | 4.8 | 4.6 | 5.6 |
| Tungsten, wt% | 22.3 | 23.8 | 17.25 |
| Fluorine, wt% | - | - | 3.35 |
| Silica, wt% | - | - | 2 |
| Alumina, wt% | - | - | 60.3 |
| Real Density, gm/cc | 4.229 | 4.238 | 4.023 |
| Particle Density, gm/cc | 1.744 | 1.451 | 1.483 |
| Packing Density, gm/cc | 1.2 | 0.85 | 0.94 |

If necessary in order to obtain the desired conversion, the catalyst may by promoted with fluorine, either by incorporating fluorine into the catalyst during its preparation or by operating the hydrocracking in the presence of a fluorine compound which is added to the feed. This will normally not be required with the processing of slack wax feeds but petrolatum feeds requiring higher levels of conversion, as discussed above, may necessitate the use of a halogenated catalyst as well as the use of higher temperatures during the hydrocracking. Fluorine compounds may be incorporated into the catalyst by impregnation during its preparation with a suitable fluorine compound such as ammonium fluoride ($NH_4F$) or ammonium bifluoride ($NH_4F.HF$) of which the latter is preferred. The amount of fluorine used in catalysts which contain this element is preferably from about 1 to 10 weight percent, based on the total weight of the catalyst, usually from about 2 to 6 weight percent. The fluorine may be incorporated by adding the fluorine compound to a gel of the metal oxide support during the preparation of the catalyst or by impregnation after the particles of the catalyst have been formed by drying or calcining the gel. If the catalyst contains a relatively high amount of fluorine as well as high amounts of the metals, as noted above, it is preferred to incorporate the metals and the fluorine compound into the metal oxide gel prior to drying and calcining the gel to form the finished catalyst particles.

The catalyst activity may also be maintained at the desired level by in situ fluoriding in which a fluorine compound is added to the stream which passes over the catalyst in this stage of the operation. The fluorine compound may be added continuously or intermittently to the feed or, alternatively, an initial activation step may be carried out in which the fluorine compound is passed over the catalyst in the absence of the feed, e.g. in a stream of hydrogen in order to increase the fluorine content of the catalyst prior to initiation of the actual hydrocracking. In situ fluoriding of the catalyst in this way is preferably carried out to induce a fluorine content of about 1 to 10 percent fluorine prior to operation, after which the fluorine can be reduced to maintenance levels sufficient to maintain the desired activity. Suitable compounds for in situ fluoriding are orthofluorotolune and difluoroethane.

The metals present on the catalyst are preferably used in their sulfide form, and to achieve this pre-sulfiding of the catalyst may be carried out prior to initiation of the hydrocracking. Sulfiding is an established technique and it is typically carried out by contacting the catalyst with a sulfur-containing gas, usually in the presence of hydrogen. The mixture of hydrogen and hydrogen sulfide, carbon disulfide or a mercaptan such a butol mercaptan is conventional for this purpose. Presulfiding may also be carried out by contacting the catalyst with hydrogen and a sulfur-containing hydrocarbon oil such as a sour kerosene or gas oil.

Because the feeds are highly paraffinic, the heteroatom content is low and accordingly the feed may be passed directly into the first process step, without the necessity of a preliminary hydrotreatment.

During the first stage of the process, the low quality, relatively aromatic components of the feed are converted by hydrocracking to products which are relatively more paraffinic in character by saturation and ring opening. The paraffinic materials present in the stream at this stage of the process possess good V.I. characteristics but have relatively high pour points as a result of their paraffinic nature. The objective in the second stage of the process is to effect a selective hydroisomerization of these paraffinic components to isoparaffins which, while possessing good viscometric properties, also have lower pour points. This enables the pour point of the final product to be obtained without an excessive degree of dewaxing following the hydroisomerization. Because the low quality aromatic components have been removed by the initial hydrocracking step there is no requirement for achieving any significant degree of aromatic saturation in the second stage of the operation so that it is possible to carry it out under relatively low pressures, typically in the range of about 200 to 1000 psig (1479 to 6991 kPa) although pressures from about 400 to 1000 psig (2857 to 6991 kPa) are more typical. In the low pressure mode of operation, it is preferred to operate the second stage with hydrogen partial pressures from at least 200 psig (1479 kPa).

Another mode of operation is with higher hydrogen pressures in the second stage, typically over 1000 psig (6991 kPa). This mode of operation is preferred since the second stage can be operated in cascade with the first stage, at an inlet pressure equal to the outlet pressure of the first stage.

In the preferred modes of operation, therefore, the second stage will operate at a hydrogen partial pressure of 400 to 1000 psig (2857 to 6991 kPa) in the low pressure mode or at hydrogen partial pressures of 1000 to 3000 psig (6991 to 20771 kPa), usually 1500-2500 psig (10436 to 17326 kPa) in the high pressure mode. Hydrogen circulation rates are comparable to those used in the first stage.

The catalyst used in the second stage is one which has a high selectivity for the isomerization of waxy, linear or near linear paraffins to less waxy, isoparaffinic products. Catalysts of this type are bifunctional in character, comprising a metal component on a large pore size, porous support of relatively low acidity. The acidity is maintained at a low level in order to reduce conversion to products boiling outside the lube boiling range during this stage of the operation. In general terms, an alpha value below 20 should be employed, with preferred values below 10, best results being obtained with alpha values below 5 and good results being achieved at alpha values of 1 to 2.

The alpha value is an approximate indication of the catalytic cracking activity of the catalyst compared to a standard catalyst. The alpha test gives the relative rate constant (rate of normal hexane conversion per volume of catalyst per unit time) of the test catalyst relative to the standard catalyst which is taken as an alpha of 1 (Rate Constant = 0.016 sec$^{-1}$). The alpha test is described in US-A-3,354,078 and in J. Catalysis, 4, 527 (1965); 6, 278 (1966); and 61, 395 (1980). For the bifunctional catalysts used in this stage of the present process, the alpha value is determined in the absence of the metal component.

The support material for the paraffin hydroisomerization catalyst is zeolite beta, a highly siliceous, zeolite in a form which has the required low level of acid activity to minimize paraffin cracking and to maximize paraffin isomerisation. Low acidity values in the zeolite may be obtained by use of a sufficiently high silica:alumina ratio in the zeolite, achievable either by direct synthesis of the zeolite with the appropriate composition or by steaming or dealuminization procedures such as acid extraction. Isomorphous substitution of metals other than aluminum may also be utilized to produce a zeolite with a low inherent acidity. Alternatively, the zeolite may be subjected to alkali metal cation exchange to the desired low acidity level, although this is less preferred than the use of a zeolite which contains framework elements other than aluminum.

Zeolite beta is the preferred support since this zeolite has been shown to possess outstanding activity for paraffin isomerization in the presence of aromatics, as disclosed in US-A-4,419,220. The low acidity forms of zeolite beta may be obtained by synthesis of a highly siliceous form of the zeolite, e.g. with a silica-alumina ratio above about 50:1 or, more readily, by steaming zeolites of lower silica-alumina ratio to the requisite acidity level. Another method is by replacement of a portion of the framework aluminum of the zeolite with another trivalent element such as boron which results in a lower intrinsic level of acid activity in the zeolite. The preferred zeolites of this type are those which contain framework boron, and normally at least 0.1 weight percent, preferably at least 0.5 weight percent, of framework boron is preferred in the zeolite. In zeolites of this type, the framework consists principally of silicon tetrahedrally coordinated and interconnected with oxygen bridges. A minor amount of a trivalent element (alumina in the case of alumino-silicate zeolite beta) is usually also coordinated and forms part of the framework. The zeolite also contains material in the pores of the structure although these do not form part of the framework constituting the characteristic structure of the zeolite. The term "framework" boron is used here to distinguish between material in the framework of the zeolite which is evidenced by contributing ion exchange capacity to the zeolite, from material which is present in the pores and which has no effect on the total ion exchange capacity of the zeolite.

Methods for preparing high silica content zeolites containing framework boron are known and are described, for example, in US-A-4,269,813 and 4,672,049. As noted there, the amount of boron contained in the zeolite may be varied by incorporating different amounts of borate ion in the zeolite forming solution, e.g., by the use of varying amounts of boric acid relative to the forces of silica and alumina. Reference is made to these disclosures for a description of the methods by which these zeolites may be made.

In low acidity zeolite beta catalysts, the zeolite should contain at least 0.1 weight percent boron. Normally, the maximum amount of boron will be about 5 weight percent of the zeolite and in most cases not more than 2 weight percent of the zeolite. The framework will normally include some alumina and the silica:alumina ratio will usually be at least 30:1, in the as-synthesized conditions of the zeolite. A preferred zeolite beta catalyst is made by steaming an initial boron-containing zeolite containing at least 1 weight percent boron (as $B_2O_3$) to result in an ultimate alpha value no greater than about 10 and preferably no greater than 5.

The steaming conditions should be adjusted in order to attain the desired alpha value in the final catalyst and typically utilize atmospheres of 100 percent steam, at temperatures of from about 800 to about 1100°F (about 427 to 595°C). Normally, the steaming will be carried out for about 12 to 48 hours, typically about 24 hours, in order to obtain the desired reduction in acidity. The use of steaming to reduce the acid activity of the zeolite has been found to be especially advantageous, giving results which are not achieved by the use of a zeolite which has the same acidity in its as-synthesized condition. It is believed that these results may be attributable to the presence of trivalent metals removed from the framework during the steaming operation which enhance the functioning of the zeolite in a manner which is not fully understood.

The zeolite will usually be composited with a matrix material to form the finished catalyst and for this purpose conventional non-acidic matrix materials such as alumina, silica-alumina and silica are suitable with preference given to silica as a non-acidic binder, although non-acidic aluminas such as alpha boehmite (alpha alumina monohydrate) may also be used, provided that they do not confer any substantial degree of acidic activity on the matrixed catalyst. The use of silica as a binder is preferred since alumina, even if non-acidic in character, may tend to react with the zeolite under hydrothermal reaction conditions to enhance its acidity. The zeolite is usually composited with the matrix in amounts from 80:20 to 20:80 by weight, typically from 80:20 to 50:50 zeolite:matrix. Compositing may be done by conventional means including mulling the materials together followed by extrusion or pelletizing into the desired finished catalyst particles. A preferred method for extruding the zeolite with silica as a binder is disclosed in US-A-4,582,815. If the catalyst is to be steamed in order to achieve the desired low acidity, it is performed after the catalyst has been formulated with the binder, as is conventional.

The isomerization catalyst also includes a metal component in order to promote the desired hydroisomerization reactions which, proceeding through unsaturated transitional species, require mediation by a hydrogenation-dehydrogenation component. In order to maximize the isomerization activity of the catalyst, metals having a strong hydrogenation function are preferred and for this reason, platinum and the other noble metals such as palladium are given a preference. The amount of the noble metal hydrogenation component is typically in the range 0.5 to 5 weight percent of the total catalyst, usually from 0.5 to 2 weight percent. The platinum may be incorporated into the catalyst by conventional techniques including ion exchange with complex platinum cations such as platinum tetraammine or by impregnation with solutions of soluble platinum compounds, for example, with platinum tetraammine salts such as platinum tetraamminechloride. The catalyst may be subjected to a final calcination under conventional conditions in order to convert the noble metal to the oxide form and to confer the required mechanical strength on the catalyst. Prior to use the catalyst may be subjected to presulfiding, by established techniques.

The conditions for the hydroisomerization are adjusted to achieve the objective of isomerizing the waxy, linear and near-linear paraffinic components in the feed to less waxy but high V.I. isoparaffinic materials of relatively lower pour point while minimizing conversion to non-lube boiling range products (usually 650°F- (345°C-) materials). Since the catalyst used has a low acidity, conversion to lower boiling products is usually at a relatively low level and by appropriate selection of severity, the operation of the process may be optimized for isomerization over cracking. At conventional space velocities of about 1, using a Pt/zeolite beta catalyst with an alpha value below 5, temperatures in the second stage will typically be in the range of about 550 to about 700°F (about 290 to 370°C) with 650°F+ (343°C+) conversion typically being from about 10 to 30 weight percent, more usually 12 to 20 weight percent, of the second stage feed. However, temperatures may be used outside this range, for example, as low as about 500°F (260°C) up to about 750°F (about 400°C) although the higher temperatures will usually not be preferred since they will be associated with a lower isomerization selectivity and the production of less stable lube products as a result of the hydrogenation reactions being thermodynamically less favored at progressively higher operating temperatures. With the increased activity resulting from the use of high hydrogen pressures in the high pressure mode, temperatures in the second stage may be somewhat lower than those appropriate to low pressure operation; in the high pressure mode, temperatures of 550 to 700°F (about 290 to 370°C) will be preferred, as compared to the preferred range of 600 to 700°F (about 315 to 370°C) for this stage of the operation in the low pressure mode. Space velocities will typically by in the range of 0.5 to 2 LHSV (hr$^{-1}$) although in most cases a space velocity of about 1 LHSV will be most favorable. Hydrogen circulation rates are comparable to those used in the first step, as described above but since there is no significant hydrogen consumption as a result of near hydrogen balance in this second step of the process, lower circulation rates may be employed if feasible. In the cascade operational mode, the excess hydrogen from the first stage will be found adequate for the second stage operation.

A particular advantage of the present process is that it enables a functional separation to be effected in the entire operating scheme. In the first stage, the undesirable low V.I. components are removed by a process of saturation and ring opening under conditions of high pressure and relatively high temperature. By contrast, the second stage is intended to maximize the content of iso-paraffins in the product and because the low V.I. materials have been dealt with in the first stage, can be optimized to effect a selective isomerization of the paraffinic materials. The relatively low temperature conditions which are appropriate for the paraffin isomerization disfavor cracking reactions but are thermodynamically favorable for the saturation of any lube range olefins which may be formed by cracking, particularly in the presence of the highly active hydrogenation components on the catalyst. Because of this, the hydroisomerization is also effective for hydrofinishing the product so that product stability is improved, especially stability to ultraviolet radiation, a property which is frequently lacking in conventional hydrocracked lube products. The isomerized product may therefore be subjected simply to a final dewaxing step in order to achieve the desired target pour point and usually there will be no need for any further finishing steps since a low unsaturates content, both of aromatics and of lube range olefins, results from the optimized processing in the two functionally separated steps of the process. The product may be subjected to a final fractionation to remove lower boiling materials, followed by a final dewaxing step in order to achieve target pour point for the product.

Although a final dewaxing step will normally be necessary in order to achieve the desired product pour point, it is a notable feature of the present process that the extent of dewaxing required is relatively small. Typically, the loss during the final dewaxing step will be not more than 15-20 weight percent of the dewaxer feed and may be lower. Either catalytic dewaxing or solvent dewaxing may be used at this point and if a solvent dewaxer is used, the removed wax may be recycled to the first or second stages of the process for further treatment. Since the wax removed in a solvent dewaxer is highly paraffinic, it may be recycled directly to the second stage if this is feasible, for example, in the embodiment where the second stage is operated at a relatively low pressure.

The preferred catalytic dewaxing processes utilize an intermediate pore size zeolite such as ZSM-5, but the most preferred dewaxing catalysts are based on the highly constrained intermediate pore size zeolites such as ZSM-22, ZSM-23 or ZSM-35, since these zeolites have been found to provide highly selective dewaxing, giving dewaxed products of low pour point and high V.I. Dewaxing processes using these zeolites are described in US-A-4,222,855. The zeolites whose use is preferred here may be characterized in the same way as described therein, i.e, as zeolites having pore openings which result in the possession of defined sorption properties set out in the patent, namely: (1) a ratio of sorption of n-hexane to o-xylene, on a volume percent basis, of greater than about 3, which sorption is determined at a $P/P_o$ of 0.1 and at a temperature of 50°C for n-hexane and 80-°C for o-xylene and (2) by the ability of selectively cracking 3-methylpentane (3MP) in preference to the doubly branched 2,3-dimethylbutane (DMB) at 1000ºF (538°C) and 1 atmosphere (bar) pressure from a 1/1/1 weight ratio mixture of n-hexane/3-methyl-pentane/2,3-dimethylbutane, with the ratio of rate constants $k_{3MP}/k_{DMB}$ determined at a temperature of 1000°F (538°C) being in excess of about 2. The expression, "$P/P_o$" is accorded its usual significance as described in the literature, for example, in "The Dynamical Character of Adsorption" by J.H. deBoer, 2nd Edition, Oxford University Press (1968) and is the relative pressure defined as the ratio of the partial pressure of sorbate to the vapor pressure of sorbate at the temperature of sorption. The ratio of the rate constants, $k_{3MP}/k_{DMB}$, is determined from 1st order kinetics, in the usual manner, by the following equation:

$$k = (I/T_c) \ln (I/I-\varepsilon)$$

where k is the rate constant for each component, $T_c$ is the contact time and $\varepsilon$ is the fractional conversion of each component.

Zeolites conforming to these sorption requirements include the naturally occurring zeolite ferrierite as well as the known synthetic zeolites ZSM-22, ZSM-23 and ZSM-35. These zeolites are at least partly in the acid or hydrogen form when they are used in the dewaxing process and a metal hydrogenation component, preferably a noble metal such as platinum is preferably used. Excellent results have been obtained with a Pt/ZSM-23 dewaxing catalyst.

The preparation and properties of zeolites ZSM-22, ZSM-23 and ZSM-35 are described in US-A-4,810,357 (ZSM-22), 4,076,842 and 4,104,151 (ZSM-23) and 4,016,245 (ZSM-35), to which reference is made for a description of this zeolite and its preparation. Ferrierite is a naturally-occurring mineral, described in the literature, see e.g. D.W. Breck, ZEOLITE MOLECULAR SIEVES, John Wiley and Sons (1974), pages 125-127, 146, 219 and 625, to which reference is made for a description of this zeolite.

In any event, however, the demands on the dewaxing unit for the product are relatively low and in this respect the present process provides a significant improvement over the process employing solely amorphous catalysts where a significant degree of dewaxing is required. The functional separation inherent in the process enables higher single pass wax conversions to be achieved, typically about 70 to 80% as compared to 50% for the amorphous catalyst process so that unit throughput is significantly enhanced with respect to the conventional process. Although conversions levels above 80 percent may be employed so that the load on the dewaxer is reduced, the product V.I. and yield decrease at the same time and generally, the final dewaxing stage cannot be completely eliminated unless products with a V.I. below about 135 are accepted.

The products from the process of the invention are high V.I., low pour point materials which are obtained in excellent yield. Besides having excellent viscometric properties they are also highly stable, both oxidatively and thermally and to ultraviolet light. V.I. values in the range of 140 to 155 are typically obtained, with values of 143 to 147 being readily achievable with product yields of at least 50 weight percent, usually at least 60 weight percent, based on the original wax feed, corresponding to wax conversion values of almost 80 and 90 percent, respectively. Another notable feature of the process is that the products retain desirable viscosity values as a result of the limited boiling range conversions which are inherent in the process: conversely, higher yields are obtained at constant product viscosity.

EXAMPLES

The following examples are given in order to illustrate various aspects of the present process. Examples 1 and 2, directly following, illustrate the preparation of low acidity Pt/zeolite beta catalysts containing framework boron.

Example 1

A boron-containing zeolite beta catalyst was prepared by crystallizing the following mixture at 285°F (140°C) for 13 days, with stirring:

| | |
|---|---|
| Boric Acid, g. | 57.6 |
| NaOH, 50%, ml. | 66.0 |
| TEABr, ml. | 384 |
| Seeds, g. | 37.0 |
| Silica, g. | 332 |
| Water, g. | 1020 |
| Notes:<br>1. TEABr = Tetraethylammonium bromide, as 50% aqueous solution.<br>2. Silica = Ultrasil (trademark) | |

The calcined product had the following analysis and was confirmed to have the structure of zeolite beta by x-ray diffraction:

| | |
|---|---|
| $SiO_2$ | 76.2 |
| $Al_2O_3$ | 0.3 |
| B | 1.08 |
| Na, ppm | 1070 |
| N | 1.65 |
| Ash | 81.6 |

Example 2

An as-synthesized boron-containing zeolite beta of Example 1 was mulled and extruded with silica in a zeolite: silica weight ratio of 65:35, dried and calcined at 900°F (480°C) for 3 hours in nitrogen, followed by 1000°F (540°C) in air for three hours. The resulting extrudate was exchanged with IN ammonium nitrate solution at room temperature for 1 hour after which the exchanged catalyst was calcined in air at 1000°F (540°C) for 3 hours, followed by 24 hours in 100 percent steam at 1025°F (550°C). The steamed extrudate was found to contain 0.48 weight percent boron (as $B_2O_3$), 365 ppm sodium and 1920 ppm $Al_2O_3$. The steamed catalyst was then exchanged for 4 hours at room temperature with IN platinum tetraammine chloride solution with a final calcination at 660°F (350°C) for three hours. The finished catalyst contained 0.87 weight percent platinum and had an alpha value of 4.

Example 3

A slack wax with the properties shown in Table 3 above and containing 30 wt% oil based on bulk solvent dewaxing (35 wt% oil by ASTM D3235) was processed by hydrocracking over a 1.5 mm trilobe NiW/fluorided alumina catalyst of the type described in Table 4 above (4.8 wt% Ni, 22.3 wt% W). The catalyst was sulfided and fluorided in-situ using o-fluorotoluene at a level of 600 ppm fluorine for one week at a temperature of 725°F (385°C) before introducing the slack wax. The hydrocracking was carried out with fluorine maintenance at 25 ppm F using o-fluorotoluene under the following conditions:

| | |
|---|---|
| LHSV, $hr^{-1}$ | 1 |
| Pressure, psig (kPa abs) | 2000 (13881) |
| $H_2$ circulation, SCF/Bbl<br>$(n.l.l^{-1})$ | 7500 (1335) |

The reaction severity was adjusted by varying the reaction temperature from 704 to 770°F (373 to 410°C) which resulted in wax conversions of 40 to 95 weight percent. Wax conversion is defined as the difference between wax in feed and wax obtained by solvent dewaxing, divided by wax in feed.

A mildly hydrocracked sample obtained at a reactor temperature of 704°F (373°C), was distilled to remove the 650°F- (343°C- material (14 weight percent) in the sample to produce a product whose properties are given in Table 5 below. This hydrocracked product was used for subsequent processing as described in Example 5 below.

TABLE 5

| Hydrocracked (704°F, 373°C) Slack Wax Properties | |
|---|---|
| Boiling range, °F (°C) | 656-1022 (347-550) |
| API | - |
| Nitrogen, ppmw | 6 |
| Sulfur, wt% | .001 |
| Pour Point, °F (°C) | 120 (49) |
| KV, 100°C, cS | 5.68 |
| KV, 300°F (150°C), cS | 2.748 |
| Molecular wt. | 478 |
| Aromatics, wt% | 2 |

Comparison of the properties of the hydrocracked slack wax as shown in Table 5 with the properties of the original slack wax, as shown in Table 3, shows that there has been a significant decrease in the aromatic content accompanied by a mild decrease in molecular weight and viscosity although pour point has not changed at all.

Figure 1 shows the lube yield relative to wax conversion, with the results from the two-stage LHDC/HDI experiments of Example 5 included for comparison. The figure shows that the lube yield for the single stage LHDC process of Example 3 reaches a maximum value of about 46 percent at about 40-60 percent wax conversion.

Example 4

This Example illustrates a single step wax hydroisomerization process (no initial hydrocracking) using a low acidity hydroisomerization catalyst.

A low acidity silica-bound zeolite beta catalyst prepared by the method described in Example 2 above was charged to a reactor in the form of 30/60 mesh (Tyler) particles and then sulfided using 2% $H_2S$/98% $H_2$ by incrementally increasing the reactor temperature up to 750°F (400°C) at 50 psig (445 kPa abs). The same slack wax that was mildly hydrocracked in Example 3 was charged directly to the catalyst without first stage hydrocracking. The reaction conditions were 400 psig (2857 kPa abs), 2500 SCF $H_2$/Bbl (445 n.l.l.$^{-1}$), and 0.5 LHSV. The results are given in Table 7 below.

Example 5

A two-step cascade lube hydrocracking/hydroisomerization (LHDC/HDI) process was carried out by the following procedure.

The low acidity Pt/zeolite beta catalyst of Example 2 was charged to the reactor and pre-sulfided as described in Example 4. The hydrocracked distillate 650°F+ (343°C+) fraction from Example 3 was then processed over this catalyst at temperatures from 622 to 667°F (328 to 353°C), 0.5 LHSV, 400 psig (2857 kPa abs) and 2500 SCF $H_2$/Bbl (445 n.l.l.$^{-1}$). The bottoms fraction was distilled to product 650°F+ (343°F+) material which was subsequently dewaxed using MEK/toluene.

The properties of the dewaxed product are given in Table 6 below.

TABLE 6

| Isomerization of Low Conversion Hydrocracked Slack Wax | | | | | | |
|---|---|---|---|---|---|---|
| | Feed | | | | | |
| Run No. | - | 5-1 | 5-2 | 5-3 | 5-4 | 5-5 |
| Temp, °F | - | 667 | 648 | 635 | 637 | 622 |
| (°c) | - | (353) | (342) | (335) | (336) | (328) |

TABLE 6   (continued)

| Isomerization of Low Conversion Hydrocracked Slack Wax | | | | | | |
|---|---|---|---|---|---|---|
| | Feed | | | | | |
| 650°F+ (343°C+) Conv, wt% | - | 28.7 | 18.8 | 12.4 | 14.5 | 10.3 |
| 650°F+ (343°C+) Pour, °F | - | 42 | 64 | 80 | 75 | 91 |
| (°C) | - | (5.6) | (17.8) | (26.7) | (23.9) | (32.8) |
| SDWO Properties | | | | | | |
| KV @ 40°C, cSt | 28.84 | 22.289 | 23.11 | 23.804 | 22.585 | 24.486 |
| KV @ 100°C, cSt | 5.711 | 4.794 | 4.974 | 5.075 | 4.890 | 5.164 |
| VI | 143 | 141 | 147 | 147 | 146 | 147 |
| Pour Point, °F | 15 | 20 | 10 | 15 | 10 | 10 |
| VI @ 0°F Pour | 140 | 137 | 145 | 144 | 144 | 145 |
| Lube Yield, wt% | | 55.6 | 61.5 | 61.2 | 60.2 | 57.4 |
| Wax Conversion | | 92 | 88 | 79 | 81 | 71 |
| Selectivity | | 40 | 51 | 56 | 54 | 55 |

The lube yield of the two-step LHDC/HDI sequence relative to wax conversion is shown in Figure 1 with the yield of the single step LHDC process given for comparison. The figure shows that the two-step processing achieves a higher lube yield of about 61 percent at about 88 percent wax conversion, both these values being significantly higher than achieved by the single step LHDC process. Process optimization is therefore achieved by the functional separation of the processing steps.

The yield data in Figure 1 also show that the high wax conversion selectivity (ratio of isomerate formed/wax converted) can be maintained at very high wax conversions (up to 90 weight percent) whereas the mild hydrocracking scheme (Example 3) cannot maintain high wax conversion selectivities above 40-50 weight percent wax conversion due to excessive overcracking at the higher conversion levels.

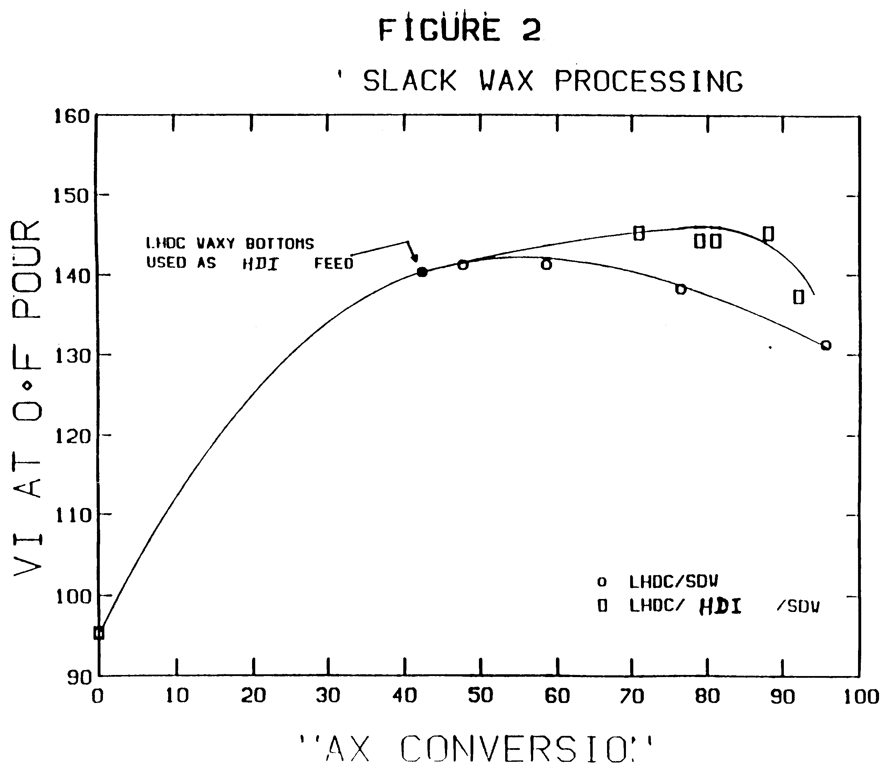

Figure 2 shows that, along with the lube yield, there is an improvement in the viscosity index (V.I.) of the product obtained from the combined LHDC/HDI scheme of Example 5 of about three numbers over the product of the mild hydrocracking of Example 3. The improved wax isomerization selectivity of the combined scheme therefore allows both higher lube yield and higher V.I. products even at high wax conversion levels.

Example 6

A two-step lube hydrocracking/hydroisomerization process was carried out using the slack wax feed of Table 3 above and the catalysts of Example 3 (hydrocracking) and Example 2 (Pt/zeolite beta). The process was operated in direct cascade at a pressure of 2000 psig (13881 kPa) in each stage, at a temperature of 715°F (380°C) for the hydrocracking and 645°F (340°C) for the hydroisomerization. The space velocity was 1.0 hr$^{-1}$ in each stage. The Pt/beta hydroisomerization catalyst used in the second stage was presulfided in the same way as described in Example 4. The results are given in Table 7 below.

Table 7 compares the maximum lube yields, product V.I.s, and reactor temperature requirements for all four slack wax processing schemes: (i) mild hydrocracking (Example 3), (ii) wax isomerization using a low acidity HDI catalyst (Pt/B-beta) (Example 4), (iii) the combined LHDC/HDI scheme of mild hydrocracking over an amorphous HDC catalyst followed by low pressure wax hydroisomerization over a low acidity Pt/B-beta catalyst (Example 5) and (iv) cascade LHDC/HDI over an amorphous HDC catalyst followed by high pressure wax hydroisomerization over a low acidity Pt/B-beta catalyst (Example 6).

TABLE 7

| Comparison of Catalyst Activities and Product Properties from Slack Wax Processing Schemes | | | | |
|---|---|---|---|---|
| Example No. | 3 | 4 | 5 | 6 |
| Process Scheme | HDC | HDI | HDC/HDI (Hi/Lo) | HDC/HDI (Hi/Hi) |
| Reactor Temp, °F | 725 | 785 | 704/648 | 715/645 |
| (°C) | (385) | (418) | (373-342) | (379-341) |
| LHSV, hr$^{-1}$ | 1.0 | 0.5 | 1.0/0.5 | 1.0/1.0 |
| Pressure, psig | 2000 | 400 | 2000/400 | 2000/2000 |
| (kPa) | (13881) | (2857) | | |
| Lube Yield, wt% | 46 | 53-55 | 61 | 61 |
| Solvent Dewaxed Oil Properties: VI @ 0°F (-18°C) | | | | |
| pour point | 141 | 135-137 | 145 | 143 |
| KV @ 100°C, cS | 4.8 | 5.8-5.9 | 5.0 | 4.9 |

Note: Lube yield determined at constant cut point.

Table 7 shows that the combined mild hydrocracking, hydroisomerization processes of Examples 5 and 6 have a significant activity advantage (about 130°F, 54°C) over the single stage paraffin hydroisomerization process of Example 4 using the same hydroisomerization catalyst (Pt/B-beta) at comparable product viscosity. Moreover, the combined processes also produce a higher V.I. product in higher yield than either the single stage high pressure hydrocracking process or the low pressure isomerization process. Thus, the integrated process scheme using either low or high pressure hydroisomerization is superior to either of the individual processes.

Example 7

This Example compares the use of low and high pressure wax hydroisomerizations. This Example, in conjunction with Example 8 also shows that a low acidity second stage catalyst ($\alpha$ < 15) is preferred over a higher acidity catalyst.

The catalyst of Example 2 was charged to a downflow reactor and sulfided as described in Example 4. The slack wax of Example 3 was then fed with hydrogen to the reactor in cocurrent downflow under the following conditions:

| LHSV, hr$^{-1}$ | 0.5 |
|---|---|
| H$_2$ Flow Rate, SCF/Bbl (n.l.l$^{-1}$) | 2500 (445) |
| Total Pressure, psig (kPa abs) | 400 and 1750 (2857 and 12159) |

Example 8

A zeolite beta sample with a bulk SiO$_2$/Al$_2$O$_3$ ratio of 40:1 was extruded with alumina to form a 65/35 weight percent cylindrical extrudate. This material was then dried, calcined and steamed to reduce the alpha to 55. Platinum was incorporated by means of ion exchange using Pt(NH$_3$)$_4$Cl$_2$. The final Pt loading was 0.6 weight percent. This catalyst was then charged to the reactor and sulfided as described above. Hydrogen was fed to the reactor together with the same slack wax described in Example 3 in cocurrent downflow under the following conditions:

| LHSV, hr$^{-1}$ | 1.0 |
|---|---|
| H$_2$ Flow Rate, SCF/Bb1 (n.1.1.$^{-1}$) | 2000 (356) |
| Total Pressure, psig (kPa abs) | 400 and 2000 (2857 and 13881) |

Table 8 below compares the maximum lube yields and V.I. of the products at maximum yield from the runs described in Examples 3, 7 and 8.

TABLE 8

| Lube Yields and Properties | | | | | |
|---|---|---|---|---|---|
| Example No. | 3 | 7 | | 8 | |
| Catalyst | NiW/alumina | 4α Pt/beta | | 55α Pt/beta | |
| Pressure, psig | 2000 | 400 | 1750 | 400 | 2000 |
| kPa | 13881 | 2857 | 12159 | 2857 | 13881 |
| Lube yield, wt% | 46 | 55-58 | 61 | 51 | 41 |
| KV,100°F, cS | 5.0 | 5.8 | 6.0 | 5.8 | 7.0 |
| Lube V.I. | 142 | 135-137 | 133-134 | 127 | 121 |

The results summarized in Table 8 show that slack wax can be processed over a low acidity catalyst such as Pt/ zeolite beta at high pressure without the yield or V.I. penalties incurred with a comparable but more acidic catalyst.

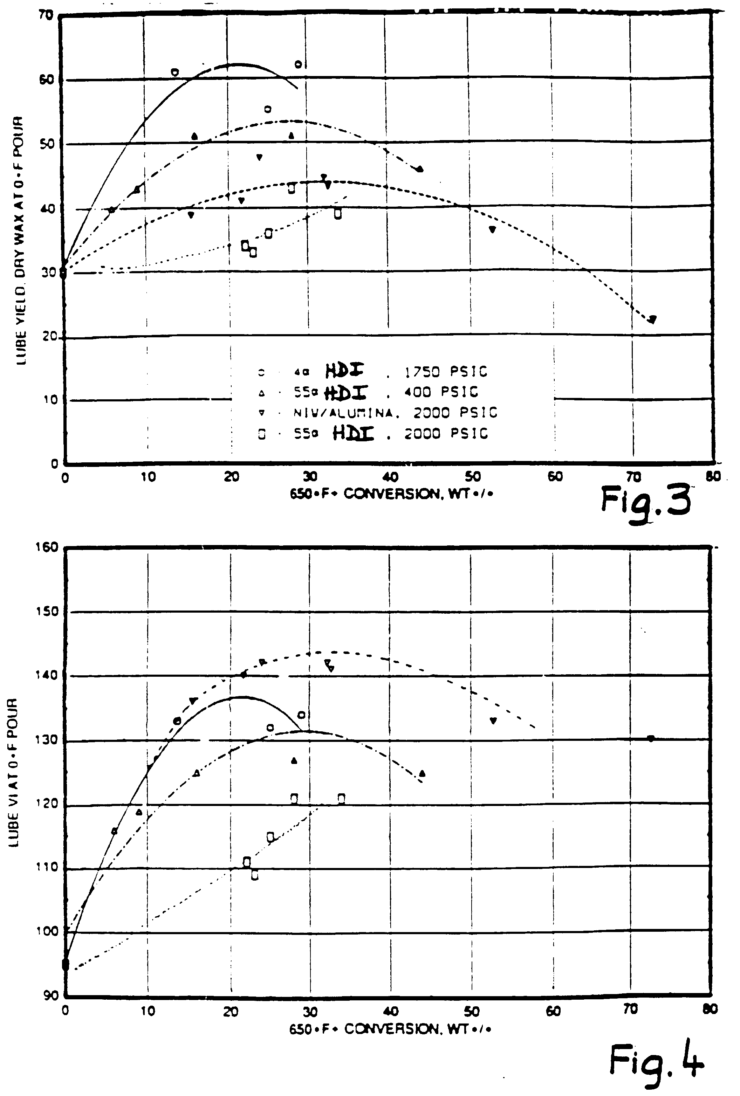

Figures 3 to 6 compare the yield and V.I. data as a function of conversion of the slack wax for the processes of Examples 3, 4, 7 and 8. Conversion here is defined as the net amount of feed converted to 650°F-(343°C-). These results show that the low acidity Pt/zeolite beta catalyst of Example 2 (4α) produces the highest yield for processing the raw slack wax, as shown by Example 4: the 4α Pt/zeolite beta catalyst produces as much as 15 percent more lube than the amorphous NiW/Al$_2$O$_3$ catalyst used in Example 3 and 10 to 20% more lube than the higher acidity 55α Pt/ zeolite beta catalyst of Example 8. Increasing the operating pressure of the hydroisomerization results in a significant yield loss in the case of the higher acidity Pt/zeolite beta catalyst of Example 8, but results in a yield increase for the low acidity Pt/zeolite beta catalyst used in Example 7.

Product V.I. is not as strongly affected by pressure with the low acidity Pt/zeolite beta as it is with the higher acidity Pt/zeolite beta catalyst.

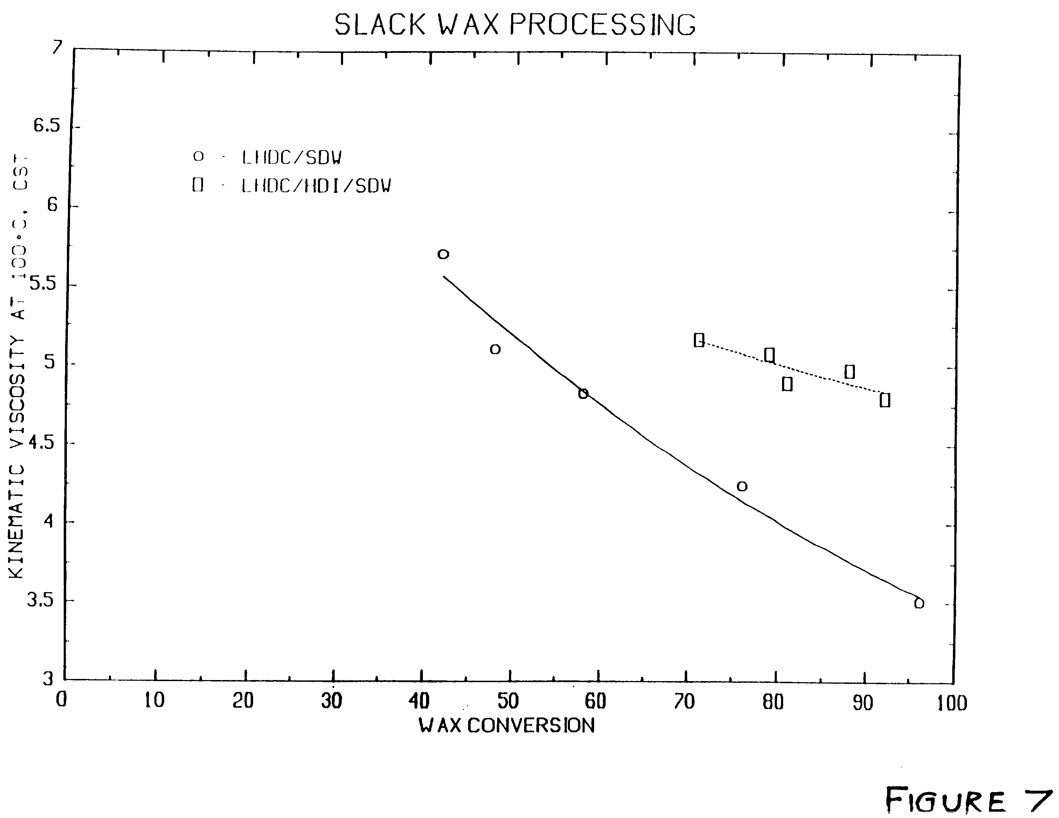

Figure 7 shows the relationship between the kinematic viscosity (at 100°C) of the product at varying wax conversions for the LHDC/HDI/SWD sequence of the present invention as well as for a conventional LHDC/SWD sequence using the same slack wax feed taken to a constant product cut point of 650°F (about 343°C). The figure shows that the present process enables viscosity to be retained to a greater degree than with the conventional processing technique as a result of the selective conversion of wax to high V.I. oil without excessive conversion of oil out of the lube boiling range. This valuable feature enables products of varying viscosities to be manufactured by suitable selection of conditions.

Example 8

A petrolatum wax having the properties set out in Table 9 below as subjected to cascade hydrocracking/hydroisomerization under the conditions set out in Table 10, to produce an 8 cSt. (nominal) lube oil. The lube yields and properties are reported for a constant viscosity cut of 7.8 cSt., at approximately 650°F (343°C) cut point.

TABLE 9

| Petrolatum Wax Properties | |
|---|---|
| Boiling range, nominal (SIMDIS), °F (°C) | 780-1300 (416-704) |
| N, ppmw | 120 |
| S, wt% | 0.3 |
| Oil content, ASTM D-3235, wt% | 25 |
| API° | 31 |

TABLE 10

| Petrolatum HDC/HDI Conditions | |
|---|---|
| Pressure, H, psig (kPa) | 2000/2000 (13881/13881) |
| LHSV, hr$^{-1}$ | 1.0/1.0 |
| Temp, °F (°C) | 745/674 (396/357) |
| Lube, at 7.8 cSt | |
| Yield, wt% | 45 |

EP 0 464 547 B1

TABLE 10   (continued)

| Petrolatum HDC/HDI Conditions | |
| --- | --- |
| KV, cSt at 100°C | 7.8 |
| VI | 144 |

The product is produced in good yield and has excellent viscometric properties, as shown by Table 10.

## Claims

1. A process for producing a high viscosity index lubricant having a viscosity index of at least 140 from a hydrocarbon feed of mineral oil origin having a wax content of at least 60 weight percent, which comprises

   (i) hydrocracking the feed at a hydrogen partial pressure of at least 800 psig (5613 kPa) over a bifunctional lube hydrocracking catalyst comprising a metal hydrogenation component on an acidic, amorphous, porous support material to hydrocrack aromatic components present in the feed at a severity which results in a conversion of from 10 to 30 weight percent of the feed to material boiling below 343°C (650°F), and
   (ii) isomerizing waxy paraffins present in the effluent from the hydrocracking in the presence of a low acidity isomerization catalyst having an alpha value of not more than 20 and comprising a noble metal hydrogenation component on a porous support material comprising zeolite beta to isomerize waxy paraffins to less waxy isoparaffins, the isomerization being conducted in the presence of hydrogen at a pressure of at least 1479 kPa (200 psig) and at a conversion to 650°F-(343°C-) material of not more than 30 %wt, based on feed to the isomerization step.

2. A process according to claim 1 in which the feed comprises a petroleum wax having an aromatic content of from 5 to 20 weight percent.

3. A process according to claim 1 or claim 2 in which the feed comprises a slack wax having an aromatic content of from 8 to 12 weight percent.

4. A process according to any preceding claim in which the metal component of the hydrocracking catalyst comprises at least one metal of Group VIII and at least one metal of Group VI of the Periodic Table.

5. A process according to any preceding claim in which the hydrocracking catalyst comprises alumina as an acidic support material.

6. A process according to any preceding claim in which the hydrocracking catalyst is a fluorided lube hydrocracking catalyst.

7. A process according to claim 6 in which the hydrocracking catalyst is pre-fluorided to a fluorine content of 1 to 10 weight percent fluorine.

8. A process according to any preceding claim in which the isomerization catalyst has an alpha value not greater than 10.

9. A process according to claim 8 in which the alpha value is not greater than 5.

10. A process according to any preceding claim in which boron is present as a framework component of the zeolite beta.

11. A process according to any preceding claim in which the isdmerization catalyst comprises from 0.5 to 2 weight percent platinum on a support comprising zeolite beta containing boron as a framework component and a matrix.

12. A process according to any preceding claim in which both hydrocracking and isomerization are carried out in the presence of hydrogen at a pressure of at least 1000 psig (6991 kPa).

13. A process according to claim 12 in which the isomerization is carried out at a temperature of from 550 to 700°F

17

EP 0 464 547 B1

(288 to 371°C).

14. A process according to any preceding claim in which the hydrocracking and/or isomerization is carried out at a temperature not greater than 650°F (343°C).

15. A process according to claim 13 or claim 14 in which the effluent from the hydrocracking is cascaded directly to the isomerization.

16. A process according to any preceding claim in which the hydrocracking is carried out at a hydrogen partial pressure of 1500 to 2500 psig (10436 to 17326 kPa).

17. A process according to any preceding claim in which the isomerization catalyst comprises a steamed Pt/zeolite beta catalyst containing boron as a framework component of the zeolite, having an alpha value not greater than 5 and a platinum content from 0.5 to 1.5 weight percent based on the total weight of the catalyst.

18. A process according to any of claims 1 to 12 in which the isomerization is carried out in the presence of hydrogen at a hydrogen partial pressure from 200 to 1000 psig (1479 to 6991 kPa) at a temperature from 600 to 700°F (316 to 371°C) in the presence of a paraffin isomerization catalyst comprising a low acidity support and having an alpha value not greater than 10, the zeolite beta contains boron as a framework component, and the product has a viscosity index of at least 140.

19. A process according to any of claims 13 to 18 in which the isomerization is carried out at a temperature from 600 to 650°F (316 to 343°C).

20. A process according to claim 19 in which the 650°F- (343°C-) conversion during the isomerization is from 10 to 20 weight percent based on the feed to the isomerization.

21. A process according to claim 19 or claim 20 in which the product of the isomerization is subjected to dewaxing to achieve a target pour point, with a loss during the dewaxing of not more than 20 weight percent.

22. A process according to any of claims 1 to 17 wherein the isomerisation is carried out in the presence of hydrogen at a hydrogen partial pressure of 1000-3000 psig (6991-20771 kPa).

23. A process according to claim 22 wherein said hydrogen partial pressure is 1500-2500 psig (10436-17326 kPa).

**Patentansprüche**

1. Verfahren zur Herstellung eines Schmiermittels mit hohem Viskositätsindex, das einen Viskositätsindex von mindestens 140 hat, aus einer von Mineralöl stammenden Kohlenwasserstoffbeschickung mit einem Wachsgehalt von mindestens 60 Gew.-%, welches umfaßt:

   (i) Hydrocracken der Beschickung bei einem Wasserstoffpartialdruck von mindestens 800 psig (5613 kPa) über einem bifunktionellen Katalysator für das Hydrocracken von Schmiermitteln, der eine Hydrierungskomponente in Form eines Metalls auf einem sauren, amorphen, porösen Trägermaterial umfaßt, um in der Beschickung vorhandene aromatische Komponenten dem Hydrocracken bei einer Severity zu unterziehen, die zu einer Umwandlung von 10 bis 30 Gew.-% der Beschickung in ein unterhalb 343°C (650°F) siedendes Material führt, und
   (ii) Isomerisieren der im Abfluß vom Hydrocracken vorhandenen wachsartigen Paraffine in Gegenwart eines Isomerisierungskatalysators mit geringer Acidität, der einen $\alpha$-Wert von nicht mehr als 20 aufweist und eine Hydrierungskomponente in Form eines Edelmetalls auf einem porösen Trägermaterial umfaßt, das Zeolith Beta umfaßt, um wachsartige Paraffine in weniger wachsartige Paraffine zu isomerisieren, wobei die Isomerisierung in Gegenwart von Wasserstoff bei einem Druck von mindestens 1479 kPa (200 psig) und bei einer Umwandlung in ein Material mit 650°F- (343°C-) von nicht mehr als 30 Gew.-% auf der Basis der Beschickung zum Isomerisierungsschritt durchgeführt wird.

2. Verfahren nach Anspruch 1, wobei die Beschickung Erdölwachs mit einem Aromatengehalt von 5 bis 20 Gew.-% umfaßt.

18

3. Verfahren nach Anspruch 1 oder Anspruch 2, wobei die Beschickung Rohparaffin mit einem Aromatengehalt von 8 bis 12 Gew.-% umfaßt.

4. Verfahren nach einem der vorstehenden Ansprüche, wobei die Metallkomponente des Hydrocrackkatalysators mindestens ein Metall der Gruppe VIII und mindestens ein Metall der Gruppe VI des Periodensystems umfaßt.

5. Verfahren nach einem der vorstehenden Ansprüche, wobei der Hydrocrackkatalysator Aluminiumoxid als saures Trägermaterial umfaßt.

6. Verfahren nach einem der vorstehenden Ansprüche, wobei der Hydrocrackkatalysator ein fluorisierter Katalysator für das Hydrocracken von Schmiermitteln ist.

7. Verfahren nach Anspruch 6, wobei der Hydrocrackkatalysator vorher bis zu einem Fluorgehalt von 1 bis 10 Gew.-% Fluor fluorisiert wird.

8. Verfahren nach einem der vorstehenden Ansprüche, wobei der Isomerisierungskatalysator einen $\alpha$-Wert von nicht mehr als 10 hat.

9. Verfahren nach Anspruch 8, wobei der $\alpha$-Wert nicht mehr als 5 beträgt.

10. Verfahren nach einem der vorstehenden Ansprüche, wobei Bor als Gitterkomponente von Zeolith Beta vorhanden ist.

11. Verfahren nach einem der vorstehenden Ansprüche, wobei der Isomerisierungskatalysator 0,5 bis 2 Gew.-% Platin auf einem Träger umfaßt, der Zeolith Beta, der Bor als Gitterkomponente enthält, und eine Matrix umfaßt.

12. Verfahren nach einem der vorstehenden Ansprüche, wobei sowohl das Hydrocracken als auch die Isomerisierung in Gegenwart von Wasserstoff bei einem Druck von mindestens 1000 psig (6991 kPa) vorgenommen werden.

13. Verfahren nach Anspruch 12, wobei die Isomerisierung bei einer Temperatur von 550 bis 700°F (288 bis 371°C) durchgeführt wird.

14. Verfahren nach einem der vorstehenden Ansprüche, wobei das Hydrocracken und/oder die Isomerisierung bei einer Temperatur von nicht mehr als 650°F (343°C) durchgeführt werden.

15. Verfahren nach Anspruch 13 oder Anspruch 14, wobei der Abfluß vom Hydrocracken in Kaskaden direkt zur Isomerisierung geleitet wird.

16. Verfahren nach einem der vorstehenden Ansprüche, wobei das Hydrocracken bei einem Partialdruck von Wasserstoff von 1500 bis 2500 psig (10436 bis 17326 kPa) erfolgt.

17. Verfahren nach einem der vorstehenden Ansprüche, wobei der Isomerisierungskatalysator einen der Dampfbehandlung unterzogenen Katalysator Pt/Zeolith Beta, der als Gitterkomponente des Zeoliths Bor enthält, mit einem $\alpha$-Wert von nicht mehr als 5 und einem Platingehalt von 0,5 bis 1,5 Gew.-%, bezogen auf das Gesamtgewicht des Katalysators, umfaßt.

18. Verfahren nach einem der Ansprüche 1 bis 12, wobei die Isomerisierung in Gegenwart von Wasserstoff bei einem Wasserstoffpartialdruck von 200 bis 1000 psig (1479 bis 6991 kPa) bei einer Temperatur von 600 bis 700°F (316 bis 371°C) in Gegenwart eines Katalysators für die Isomerisierung von Paraffinen durchgeführt wird, der einen Träger mit geringer Acidität umfaßt und einen $\alpha$-Wert von nicht mehr als 10 aufweist, wobei der Zeolith Beta Bor als Gitterkomponente enthält und das Produkt einen Viskositätsindex von mindestens 140 hat.

19. Verfahren nach einem der Ansprüche 13 bis 18, wobei die Isomerisierung bei einer Temperatur von 600 bis 650°F (316 bis 343°C) durchgeführt wird.

20. Verfahren nach Anspruch 19, wobei die 650°F$^-$(343°C$^-$)-Umwandlung während der Isomerisierung 10 bis 20 Gew.-%, bezogen auf die Beschickung zur Isomerisierung, beträgt.

**21.** Verfahren nach Anspruch 19 oder Anspruch 20, wobei das Produkt der Isomerisierung dem Entparaffinieren unterzogen wird, um den zu erzielenden Pourpoint zu erreichen, wobei der Verlust beim Entparaffinieren nicht mehr als 20 Gew.-% beträgt.

**22.** Verfahren nach einem der Ansprüche 1 bis 17, wobei die Isomerisierung in Gegenwart von Wasserstoff bei einem Wasserstoffpartialdruck von 1000 - 3000 psig (6991 - 20771 kPa) durchgeführt wird.

**23.** Verfahren nach Anspruch 22, wobei der Wasserstoffpartialdruck 1500 - 2500 psig (10436 - 17326 kPa) beträgt.

**Revendications**

**1.** Procédé de production d'un lubrifiant à haut indice de viscosité, ayant un indice de viscosité d'au moins 140, à partir d'une charge d'alimentation hydrocarbonée provenant d'une huile minérale ayant une teneur en cire d'au moins 60% en poids, qui comprend :

(i) l'hydrocraquage de la charge d'alimentation sous une pression partielle d'hydrogène d'au moins 5613 kPa (800 psig) sur un catalyseur bifonctionnel d'hydrocraquage de lubrifiants comprenant un composant d'hydrogénation métallique sur un matériau de support poreux, amorphe, acide, pour hydrocraquer les composants aromatiques présents dans la charge d'alimentation avec une sévérité qui conduit à une conversion de 10 à 30% en poids de la charge d'alimentation en produits bouillant en dessous de 343°C (650°F), et
(ii) l'isomérisation des paraffines cireuses présentes dans l'effluent provenant de l'hydrocraquage en présence d'un catalyseur d'isomérisation de faible acidité, ayant une valeur de alpha ne dépassant pas 20 et comprenant un composant d'hydrogénation de type métal noble sur un matériau de support poreux comprenant une zéolite bêta pour isomériser les paraffines cireuses en isoparaffines moins cireuses, l'isomérisation étant conduite en présence d'hydrogène à une pression d'au moins 1479 kPa (200 psig) et avec une conversion en produits bouillant en dessous de 343°C (de 650°F-) qui ne dépasse pas 30% en poids par rapport à la charge d'alimentation de l'étape d'isomérisation.

**2.** Procédé suivant la revendication 1, dans lequel la charge d'alimentation comprend une cire de pétrole ayant une teneur en produits aromatiques de 5 à 20% en poids.

**3.** Procédé suivant l'une quelconque des revendications 1 ou 2, dans lequel la charge d'alimentation comprend un gatsch ayant une teneur en produits aromatiques de 8 à 12% en poids.

**4.** Procédé suivant l'une quelconque des revendications précédentes, dans lequel le composant métallique du catalyseur d'hydrocraquage comprend au moins un métal du Groupe VIII et au moins un métal du Groupe VI du Tableau de Classification Périodique.

**5.** Procédé suivant l'une quelconque des revendications précédentes, dans lequel le catalyseur d'hydrocraquage comprend de l'alumine comme matériau de support acide.

**6.** Procédé suivant l'une quelconque des revendications précédentes, dans lequel le catalyseur d'hydrocraquage est un catalyseur fluoré d'hydrocraquage de lubrifiants.

**7.** Procédé suivant la revendication 6, dans lequel le catalyseur d'hydrocraquage est pré-fluoré à une teneur en fluor de 1 à 10% en poids de fluor.

**8.** Procédé suivant l'une quelconque des revendications précédentes, dans lequel le catalyseur d'isomérisation a une valeur de alpha qui ne dépasse pas 10.

**9.** Procédé suivant la revendication 8, dans lequel la valeur de alpha ne dépasse pas 5.

**10.** Procédé suivant l'une quelconque des revendications précédentes, dans lequel du bore est présent en tant que composant du réseau de la zéolite bêta.

**11.** Procédé suivant l'une quelconque des revendications précédentes, dans lequel le catalyseur d'isomérisation comprend de 0,5 à 2% en poids de platine sur un support comprenant une zéolite bêta contenant du bore en tant que composant du réseau, et une matrice.

12. Procédé suivant l'une quelconque des revendications précédentes, dans lequel l'hydrocraquage et l'isomérisation sont tous deux effectués en présence d'hydrogène à une pression d'au moins 6991 kPa (1000 psig).

13. Procédé suivant la revendication 12, dans lequel l'isomérisation est effectuée à une température de 288 à 371°C (550 à 700°F).

14. Procédé suivant l'une quelconque des revendications précédentes, dans lequel l'hydrocraquage et/ou l'isomérisation sont effectués à une température qui ne dépasse pas 343°C (650°F).

15. Procédé suivant les revendications 13 ou 14, dans lequel l'effluent provenant de l'hydrocraquage est envoyé en cascade directement à l'isomérisation.

16. Procédé suivant l'une quelconque des revendications précédentes, dans lequel l'hydrocraquage est effectué à une pression partielle d'hydrogène de 10436 à 17326 kPa (1500 à 2500 psig).

17. Procédé suivant l'une quelconque des revendications précédentes, dans lequel le catalyseur d'isomérisation comprend un catalyseur à base de Pt/zéolite bêta traité à la vapeur contenant du bore comme composant du réseau de la zéolite, ayant une valeur de alpha ne dépassant pas 5 et une teneur en platine de 0,5 à 1,5% en poids par rapport au poids total du catalyseur.

18. Procédé suivant l'une quelconque des revendications 1 à 12, dans lequel l'isomérisation est effectuée en présence d'hydrogène à une pression partielle d'hydrogène de 1479 à 6991 kPa (200 à 1000 psig), à une température de 316 à 371°C (600 à 700°F) en présence d'un catalyseur d'isomérisation de paraffines comprenant un support de faible acidité et ayant une valeur de alpha ne dépassant pas 10, la zéolite bêta contient du bore en tant que composant du réseau, et le produit a un indice de viscosité d'au moins 140.

19. Procédé suivant l'une quelconque des revendications 13 à 18, dans lequel l'isomérisation est effectuée à une température de 316 à 343°C (600 à 650°F).

20. Procédé suivant la revendication 19, dans lequel la conversion en produits ayant un point d'ébullition inférieur à 343°C (650°F) pendant l'isomérisation est de 10 à 20% en poids par rapport à la charge d'alimentation de l'isomérisation.

21. Procédé suivant les revendications 19 ou 20, dans lequel le produit de l'isomérisation est soumis à un déparaffinage pour atteindre un point de coulée cible, avec une perte pendant le déparaffinage ne dépassant pas 20% en poids.

22. Procédé suivant l'une quelconque des revendications 1 à 17, dans lequel l'isomérisation est effectuée en présence d'hydrogène à une pression partielle d'hydrogène de 6991 à 20771 kPa (1000 à 3000 psig).

23. Proc`8e dé suivant la revendication 22, dans lequel ladite pression partielle d'hydrogène est de 10436 à 17326 kPa (1500 à 2500 psig).

FIGURE 1

SLACK WAX PROCESSING

LUBE YIELD AT 0°F POUR

WAX CONVERSION

o  LHDC/SDW
□  LHDC/HDI /SDW

LHDC WAXY BOTTOMS
USED AS HDI FEED

FIGURE 2

SLACK WAX PROCESSING

Fig. 3

Fig. 4

Fig.5

Fig. 6

FIGURE 7

SLACK WAX PROCESSING

KINEMATIC VISCOSITY AT 100°C, CST

WAX CONVERSION

o - LHDC/SDW
□ - LHDC/HDI/SDW